# EUROPÄISCHE PATENTANMELDUNG

(11) **EP 1 346 700 A1**
(43) Veröffentlichungstag der Anmeldung: **24.09.2003**
(21) Anmeldenummer: 03005150.2
(22) Anmeldetag: 07.03.2003
(51) Int. Cl.: A61C 3/025, A61C 1/00, B24C 7/00

(54) **Handstück für ein dentales Abrasivstrahlgerät mit Schutzfilter**

(30) Priorität: 22.03.2002 DE 10212925
(71) Anmelder: Ferton Holding SA, 2800 Delémont (CH)
(72) Erfinder: Sierro, Alexandre, 1298 Celigny (CH); Beerstecher, Lutz, 1277 Borex (CH)
(74) Vertreter: Gauger, Hans-Peter, Dipl.-Ing.

(57) **Zusammenfassung**

Ein Handstück für ein dentales Abrasivstrahlgerät weist in einer Versorgungsleitung für Luft (7, 8) ein Rückschlagventil (14) auf, für dessen Schutz stromabwärts von einem gemeinsamen Versorgungsanschluss für Luft und Wasser und stromaufwärts von dem Rückschlagventil (14) ein optimal mit einem engmaschigen Siebkörper ausgebildeter Filter (16) angeordnet ist stromabwärts von dem Rückschlagventil (14) und stromaufwärts von dem Austritt der Luft in einen mit dem Handstück integrierten Pulverbehälter (1) ist bevorzugt noch ein weiterer Filter (18) angeordnet, der zur Verhinderung eines Rückströmens der Luft im Gemisch mit dem Pulver des Pulverbehälters (1) optimal als ein feinporiger gesinterter Metallkörper oder ein ebenso feinporiger Kunststoffkörper ausgebildet ist.

## Beschreibung

Die Erfindung bezieht sich auf ein Handstück für ein dentales Abrasivstrahlgerät gemäß dem Oberbegriff des Patentanspruches 1.

Ein Handstück dieser Art ist aus der EP 0 834 291 B1 bekannt. Der mit dem Handstück integrierte Pulverbehälter ist dabei in der Längsachse der Griffhülse angeordnet und ist mit einer rückwärtigen Hülsenverdickung verschraubt. An die Hülsenverdickung ist ein schräg zu der Längsachse ausgerichteter Anschlussstutzen angeformt, der an seinem Ende den abgedichteten Versorgungsanschluss für Wasser und Luft aufnimmt. Das in der Versorgungsleitung für Luft angeordnete, als Kugelventil ausgebildete Rückschlagventil ist in einem Einsatzstück angeordnet, das einen Bauteil eines Kupplungsanschlusses bildet. Das Rückschlagventil erfüllt hierbei den Zweck, ein Rückströmen der mit Pulverteilchen angereicherten Luft aus dem Pulverbehälter zurück zu dem Kupplungsanschluss zu verhindern und damit Verunreinigungen des Kupplungsanschlusses mit den abrasiven Pulverteilchen zu vermeiden.

Aus der EP 0 870 477 B1 ist ein vergleichbares Handstück bekannt, bei welchem der integrierte Pulverbehälter etwa auf halber Länge der Griffhülse angeordnet und mit ihm im wesentlichen der Schwerebereich des Handstückes ausgebildet ist. Der Pulverbehälter ist als ein Rotationshohlkörper geformt, der eine räumlich nach allen Richtungen wirksame Wirbelkammer ergibt. Innerhalb des Pulverbehälters sind das mit einem Rohrstück ausgebildete Auslassende einer Druckluft-Zuleitung und das ebenfalls mit einem Rohrstück ausgebildete Einlassende einer Überführungsleitung für das Luft-Pulver-Gemisch angeordnet. Die Überführungsleitung für das Luft-Pulver-Gemisch ist gemeinsam mit einer Versorgungsleitung für Wasser an die Düsenanordnung eines Düsenstückes angeschlossen, welches durch das vordere Ende einer Griffhülse des Handstückes gehalten wird.

Aus der DE 101 13 289 A1 ist ein dentales Abrasivstrahlgerät bekannt, bei welchem in einer Versorgungsleitung für Luft, die an einen weiter mit einem Handstück verbundenen separaten Pulverbehälter angeschlossen ist, hintereinander ein Kondensatabscheider und ein Rückschlagventil beide stromabwärts von einem Versorgungsanschluss dieser Leitung angeordnet sind. Der Kondensatabscheider soll dabei sicherstellen, dass ausschließlich trockene Luft zu dem Pulverbehälter gelangen kann.

Der Erfindung liegt die Aufgabe zugrunde, ein Handstück für ein dentales Abrasivstrahlgerät der durch den Oberbegriff des Patentanspruches 1 angegeben Art für einen weitergehenden Schutz des Versorgungsanschlusses auszubilden sowie optimal auch zu verhindern, dass bereits das Rückschlagventil mit Pulverteilchen eines aus dem Pulverbehälter rückströmenden Luftstromes verunreinigt wird.

Diese Aufgabe wird erfindungsgemäß mit einem Handstück für ein dentales Abrasivstrahlgerät gelöst, welches die Merkmale gemäß dem Patentanspruch 1 sowie optimal auch die Merkmale des Patentanspruches 2 aufweist. Weitere vorteilhafte und zweckmäßige Ausbildungen des erfindungsgemäßen Handstückes sind durch die Merkmale der weiteren Ansprüche angegeben.

Bei dem erfindungsgemäßen Handstück erfüllt der wenigstens eine Filter, der in der Versorgungsleitung für Luft stromaufwärts von dem Rückschlagventil angeordnet ist, den primären Zweck, ein Vordringen von Verunreinigungen, die von der zuströmenden Luft mitgeführt werden können, hin zu dem Rückschlagventil zu verhindern. Dieser Filter sollte deshalb auch bevorzugt als ein sehr engmaschiger Siebkörper ausgebildet werden, um daneben auch zu verhindern, dass aus dem für Luft und Wasser gemeinsamen Versorgungsanschluss ungewollt Wasser über die Versorgungsleitung für Luft in den Pulverbehälter vordringt. Der Filter kann mit dieser Ausbildung größere Wassertropfen zurückzuhalten, sodass sie unter der zuströmenden Luft zerstäubt und in einen gasförmigen Zustand gebracht werden, dessen eventuelles Vordringen in den Pulverbehälter unschädlich wäre. Diese Wirkung eines dem Rückschlagventil vorgeschalteten Filters kann noch dadurch wesentlich optimiert werden, dass dem Rückschlagventil noch ein weiterer Filter nachgeschaltet wird. Wenn dieser weitere Filter die bevorzugte Ausbildung mit einem feinporigen gesinterten Metallkörper oder auch einem ebenso feinporigen Kunststoffkörper erhält und an einer Stelle angeordnet wird, die sich stromaufwärts von dem Austritt der Luft in den Pulverbehälter befindet, dann wird mit diesem weiteren Filter andererseits primär bezweckt, ein Rückströmen der Luft aus dem Pulverbehälter und damit auch von Pulverteilchen zurück zu dem Rückschlagventil zu verhindern. Auch wird mit diesem weiteren Filter die Erreichbarkeit eines unschädlichen gasförmigen Zustandes von vordringenden Wassertropfen noch weiter unterstützt. Wenn für eine bevorzugte Ausführungsform des Handstückes die beiden Filter und das Rückschlagventil in einem einen Abschnitt der Versorgungsleitung für Luft bildenden Rohrstück angeordnet sind, kann dann mit einer solchen Ausbildung auch eine sehr einfache Montage dieser Bauteile und deren einfache Austauschmöglichkeit erhalten werden.

Ein Ausführungsbeispiel des erfindungsgemäßen Handstückes ist in der Zeichnung schematisch dargestellt und wird nachfolgend näher beschrieben. Es zeigt
- Fig. 1: eine Schnittdarstellung des Handstückes,
- Fig. 2: die Einzelheit A in vergrößertem Maßstab und
- Fig. 3: die Einzelheit B in vergrößertem Maßstab.

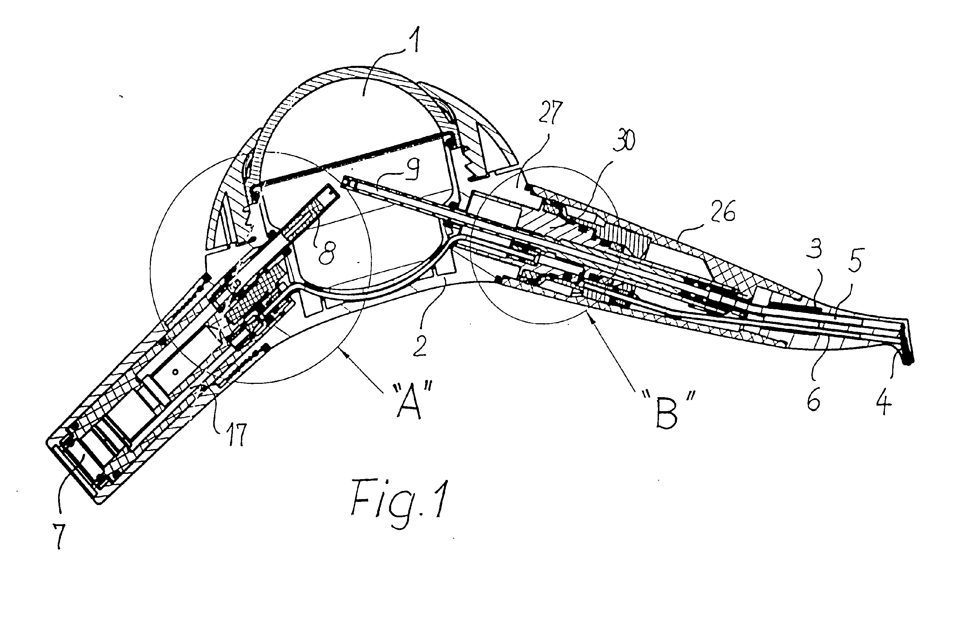

Das in Fig. 1 mit einer Schnittdarstellung gezeigte Handstück ist für ein dentales Abrasivstrahlgerät vorgesehen und weist dafür eine Ausbildung auf, die in ihren wesentlichen Einzelheiten mit dem Handstück gemäß der EP 0 870 477 B1 übereinstimmt. Für eine nähere Beschreibung dieses Handstückes wird daher auf diese Veröffentlichung hingewiesen und wird hier nur angegeben, dass das Handstück einen integrierten Pulverbehälter 1 aufweist, der etwa auf halber Länge einer Griffhülse 2 angeordnet ist, die an ihrem vorderen Ende eine von einem Düsenstück 3 aufgenommene Düsenanordnung 4 aufweist. An die Düsenanordnung 4 sind zwei getrennte Anschlussleitungen 5 und 6 für die Zuleitung eines Luft-Pulver-Gemisches und von Wasser angeschlossen, wobei die Luft und das Wasser aus einem abgedichteten Versorgungsanschluss 7 an dem rückwärtigen Ende der Griffhülse 2 zugeleitet werden. Die Luft wird für eine Beimischung des Pulvers innerhalb des als eine Wirbelkammer wirksamen Pulverbehälters 1 über das Auslassende eines Rohrstückes 8 in den Pulverbehälter zugeleitet. Nach der Beimischung des Pulvers wird das gebildete Luft-Pulver-Gemisch über das Einlassende eines weiteren Rohrstückes 9 an die zu der Düsenanordnung 4 führende Anschlussleitung 5 weitergeleitet.

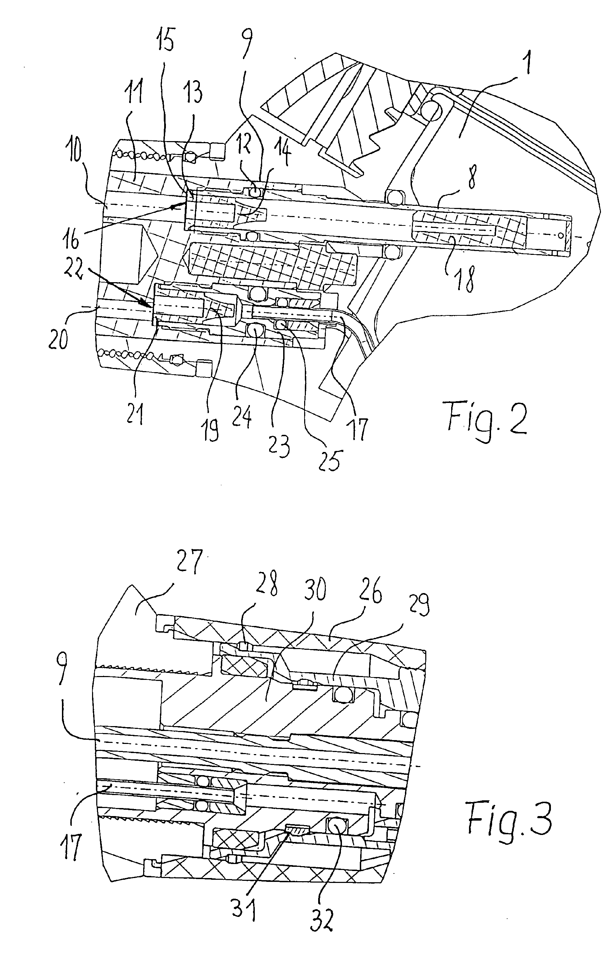

Wie aus der vergrößerten Darstellung der Einzelheit A in Fig. 2 hervorgeht, ist das Rohrstück 8 in den größeren Durchmesser 9 einer Stufenbohrung 10 eingesetzt, die in einem Einsatzstück 11 des rückwärtigen Endes der Griffhülse 2 ausgebildet ist. Das Rohrstück 8 ist dabei durch eine Ringdichtung 12 gegen den größeren Durchmesser 9 der Stufenbohrung abgedichtet und drückt einen Ringflansch 13 eines elastisch-federnden "Entenschnabel"-Ventilkörpers 14 gegen eine Anschlagschulter 15 an, die im Übergang des kleineren Durchmessers zu dem größeren Durchmesser der Stufenbohrung 10 ausgebildet ist. Mit dem Ventilkörper 14 wird ein Rückschlagventil erhalten, welches die über den kleineren Durchmesser der Stufenbohrung 10 zuströmende Druckluft in Richtung des Vorratsbehälters 1 durchlässt, ein Rückströmen der Luft aber verhindert. Unmittelbar stromaufwärts von diesem Rückschlagventil ist noch ein Filter 16 in der Ausbildung eines engmaschigen Siebkörpers angeordnet, der durch den Ringflansch 13 gegen die Anschlagschulter 15 gedrückt wird. Der Filter 16 erfüllt den primären Zweck, ein Vordringen von Verunreinigungen, die von der über den Versorgungsanschluss 7 zuströmenden Luft mitgeführt werden können, hin zu dem Rückschlagventil zu verhindern. Mit dem Filter 16 wird daneben anfänglich auch ein Vordringen von Wasser über das Rohrstück 8 in den Pulverbehälter 1 verhindert, sofern es an dem Versorgungsanschluss 7 zu einer fehlerhaften Überleitung des Wassers in die Versorgungsleitung 17 kommen sollte, die zu der Anschlussleitung 6 der Düsenanordnung 4 weitergeführt ist.

Die doppelte Funktion des Filters 16 wird mit einem weiteren Filter 18 ergänzt, der in das Auslassende des Rohrstückes 8 eingesetzt ist. Der Filter 18 ist bevorzugt mit einem feinporigen gesinterten Metallkörper oder einem ebenso feinporigen Kunststoffkörper ausgebildet und ergibt vorrangig eine Schutzwirkung für den elastisch-federnden Ventilkörper 14 des Rückschlagventils. Mit dem weiteren Filter 18 wird hauptsächlich verhindert, dass die aus dem Pulverbehälter 1 rückströmende Luft und damit auch das der Luft beigemischte Pulver zurück zu dem Rückschlagventil vordringen. Das Rückschlagventil wird dadurch entsprechend optimal vor Verunreinigungen geschützt. Daneben wird mit diesem weiteren Filter 18 auch erreicht, dass alles Wasser , das noch bis an das Auslassende der Luft vordringen sollte, durch diesen Filter in einen gasförmigen Zustand überführt wird, sodass der Pulverbehälter für die Beimischung des Pulvers zu der zuströmenden Luft völlig trocken bleibt.

In Fig. 2 ist daneben noch gezeigt, dass in der Versorgungsleitung 17 für Wasser ein weiteres Rückschlagventil in der Ausbildung ebenfalls eines elastisch-federnden "Entenschnabel"-Ventilkörpers 19 angeordnet ist. Auch der Ventilkörper 19 ist in den größere Durchmesser einer Stufenbohrung 20 eingesetzt und wird an einem Ringflansch 21 gemeinsam mit einem Filter 22 in der Ausbildung ebenfalls eines engmaschigen Siebkörpers gegen eine Anschlagschulter im Übergang des kleineren Durchmessers zu dem größeren Durchmesser der Stufenbohrung 20 durch eine Buchse 23 angedrückt. Die Buchse 23 nimmt auch das Anschlussende der Versorgungsleitung 17 auf und ist in den größeren Durchmesser der Stufenbohrung 20 eingesetzt. Eine Ringdichtung 24 ist für eine Abdichtung der Buchse 23 gegen den größeren Durchmesser der Stufenbohrung 20 vorgesehen. Eine weitere Ringdichtung 25 dichtet die Versorgungsleitung 17 gegen die Buchse 23 ab.

Aus der vergrößerten Darstellung der Einzelheit B in Fig. 3 ist ersichtlich, dass ein zur Halterung des Düsenstückes 3 vorgesehenes Griffstück 26 an einem an den Pulverbehälter 1 angeformten Ansatz 27 zentriert ist. Das Griffstück 26 ist über ein Drehlager 28 auf einem Stützkörper 29 drehbar gelagert, der auf einem koaxialen Vorsprung 30 des Pulverbehälters 1 angeordnet ist. Der Vorsprung 30 zentriert das Rohrstück 9, über welches das Luft-Pulver-Gemisch an die Anschlussleitung 5 der Düsenanordnung 4 weitergeleitet wird. Zu diesem Vorsprung ist auch die Versorgungsleitung 17 für Wasser geführt, welches über die Anschlussleitung 6 an die Düsenanordnung 4 weitergeleitet wird. Der Stützkörper 29 ist mit dem Vorsprung 30 über eine Rastverbindung 31 verbunden und durch eine Ringdichtung 32 abgedichtet.

## Patentansprüche

1. Handstück für ein dentales Abrasivstrahlgerät, bei welchem an eine Düsenanordnung am vorderen Ende einer Griffhülse getrennte Anschlussleitungen für ein mit Luft vermischtes abrasives Dentalpulver und für Wasser angeschlossen sind, wobei die Luft und das Wasser über getrennte Versorgungsleitungen aus einem abgedichteten Versorgungsanschluss am rückwärtigen Ende der Griffhülse zuleitet werden und die Beimischung des Pulvers zu der Luft in einem mit dem Handstück integrierten Pulverbehälter stromabwärts von einem Rückschlagventil (14, 19) vorgenommen wird, das in dem zu dem Pulverbehälter führenden Abschnitt der Versorgungsleitung für Luft angeordnet ist,
**dadurch gekennzeichnet, dass**
in der Versorgungsleitung (7, 8) für Luft stromabwärts von dem Versorgungsanschluss und stromaufwärts von dem Rückschlagventil (14) ein Filter (16) angeordnet ist.

2. Handstück nach Anspruch 1, **dadurch gekennzeichnet, dass** in der Versorgungsleitung für Luft (7, 8) stromabwärts von dem Rückschlagventil (14) und stromaufwärts von dem Austritt der Luft in den Pulverbehälter (1) ein weiterer Filter (18) angeordnet ist.

3. Handstück nach Anspruch 1 oder 2, **dadurch gekennzeichnet, dass** in der Versorgungsleitung (17) für Wasser ein weiteres Rückschlagventil (19) gemeinsam mit einem stromaufwärts angeordneten Filter (22) vorgesehen ist.

4. Handstück nach einem der Ansprüche 1 bis 3, **dadurch gekennzeichnet, dass** der stromaufwärts von dem einen oder von den beiden Rückschlagventilen (14, 19) in den betreffenden Versorgungsleitungen für Luft (7, 8) und Wasser (17) jeweils angeordnete Filter (16, 22) mit einem engmaschigen Siebkörper ausgebildet ist.

5. Handstück nach Anspruch 2, **dadurch gekennzeichnet, dass** der stromabwärts von dem Rückschlagventil (14) in der Versorgungsleitung (7, 8) für Luft angeordnete weitere Filter (18) mit einem feinporigen gesinterten Metallkörper oder einem ebenso feinporigen Kunststoffkörper ausgebildet ist.

6. Handstück nach einem der Ansprüche 1 bis 5, **dadurch gekennzeichnet, dass** das oder jedes Rückschlagventil (14, 19) in einem als Stufenbohrung (10, 20) ausgebildeten Abschnitt der betreffenden Versorgungsleitung für Luft (7, 8) bzw. Wasser (17) eingesetzt ist, wobei mit der im Übergang eines kleineren Durchmessers zu einem größeren Durchmesser (9) der Stufenbohrung (10, 20) vorhandenen Stufe eine Anschlagschulter (15) für das betreffende Rückschlagventil (14, 19) ausgebildet ist.

7. Handstück nach Anspruch 6, **dadurch gekennzeichnet, dass** die eine oder die beiden Stufenbohrungen (10, 20) mit einem Einsatzstück (11) des rückwärtigen Endes der Griffhülse (2) ausgebildet sind, welches das eine oder die beiden Rückschlagventile (14, 19) gemeinsam mit dem jeweils stromaufwärts angeordneten Filter (16, 22) aufnimmt.

8. Handstück nach Anspruch 6 oder 7, **dadurch gekennzeichnet, dass** das oder jedes Rückschlagventil (14, 19) in den jeweils größeren Durchmesser (9) der betreffenden Stufenbohrung (10, 20) eingesetzt und in der Stufenbohrung durch eine abgedichtete Buchse (23) festgelegt ist.

9. Handstück nach Anspruch 6 oder 7, **dadurch gekennzeichnet, dass** das Rückschlagventil (14) der Versorgungsleitung (7, 8) für Luft durch ein in den größeren Durchmesser (9) der betreffenden Stufenbohrung (10) abgedichtet eingesetztes Rohrstück (8) festgelegt wird, das mit einem freien Auslassende in den Pulverbehälter (1) vorsteht und stromaufwärts von einem Auslassende den weiteren Filter (18) aufnimmt.

10. Handstück nach Anspruch 8 oder 9, **dadurch gekennzeichnet, dass** das oder jedes Rückschlagventil (14) mit einem elastisch-federnden "Entenschnabel"-Ventilkörper ausgebildet ist, der an einem Ringflansch (13) durch die Buchse (23) bzw. das Rohrstück (8) in der größeren Bohrung (9) der betreffenden Stufenbohrung (10, 20) festgelegt wird.

11. Handstück nach einem der Ansprüche 1 bis 10, bei welchem ein die Düsenanordnung aufnehmendes Düsenstück (3) durch ein außen an dem Pulverbehälter (1) zentriertes und drehbar gelagertes Griffstück (26) gehalten ist.

12. Handstück nach Anspruch 11, **dadurch gekennzeichnet, dass** das Griffstück (26) auf einem koaxialen Vorsprung(30) des Pulverbehälters (1) angeordnet ist, wobei der Vorsprung (30) die Anschlussleitungen (5, 6) für das Luft-Pulver-Gemisch und für Wasser aufnimmt und ein Stützkörper (29) für ein Drehlager (28) des Griffstückes (26) mit dem Vorsprung über eine Rastverbindung (31 )verbunden ist.
